# EUROPÄISCHE PATENTSCHRIFT

(11) **EP 3 348 995 B1**
(45) Veröffentlichungstag und Bekanntmachung des Hinweises auf die Patenterteilung: **13.05.2020**
(21) Anmeldenummer: 18151076.9
(22) Anmeldetag: 10.01.2018
(51) Int. Cl.: G01N 21/33, C02F 1/28, C02F 1/78, C02F 101/30

(54) **VERFAHREN ZUR ENTFERNUNG VON MIKROVERUNREINIGUNGEN AUS DEM ABWASSER**
METHOD FOR THE REMOVAL OF MICROPOLLUTANTS FROM WASTEWATER AND CLEANING SYSTEM FOR MEASURING PROBES
PROCÉDÉ D'ÉLIMINATION DE MICRO-IMPURETÉS DES EAUX USÉES ET SYSTÈME DE NETTOYAGE DE SONDES DE MESURE

(30) Priorität: 11.01.2017 EP 17151067
(43) Veröffentlichungstag der Anmeldung: 18.07.2018
(73) Patentinhaber: IKA Neugut, 8600 Dübendorf (CH); Schachtler, Max, 4900 Langenthal (CH)
(72) Erfinder: SCHACHTLER, Max, 4900 Langenthal (CH)
(74) Vertreter: DTS Patent- und Rechtsanwälte Schnekenbühl und Partner mbB

(56) Entgegenhaltungen:
- WO-A1-2010/023311
- DE-A1-102014 010 946
- FR-A1- 3 009 789
- JP-A- S58 215 538
- US-A- 5 493 124
- Max Schachtler ET AL: "BEAR: INNOVATIVE REGEL- STRATEGIE DER OZONUNG UV-MESSTECHNIK FÜR REGELUNG UND ÜBERWACHUNG DER ELIMINATION VON MIKROVERUNREINIGUNGEN EINLEITUNG", AQUA & GAS, 1. Mai 2016 (2016-05-01), Seiten 84-93, XP055381139, Gefunden im Internet: URL:http://www.neugut.ch/scms/upload/Text/ Ozonung/FA_Schachtler_low.pdf [gefunden am 2017-06-13]

## Beschreibung

Die Erfindung betrifft generell ein Verfahren zur Entfernung von Mikroverunreinigungen aus dem Abwasser/Trinkwasser mittels Ozon oder Pulveraktivkohle, bei dem die Ozon- oder Pulveraktivkohle-Dosierung auf optimierte Weise regel- bzw. steuerbar ist. Des Weiteren wird ein optimiertes Reinigungssystem für die zur Regelung bzw. Steuerung verwendeten Messsonden angegeben.

Die am 1. Januar 2016 in Kraft getretene neue Schweizer Gewässerschutzverordnung stellt als zentrale Anforderung an die heimischen Abwasserreinigungsanlagen (ARA), eine Eliminationsleistung bei Mikroverunreinigungen (EMV) von über 80 % bereitzustellen. Die Eliminationsleistung wird dabei anhand von 12 definierten Leitsubstanzen gemäss der Verordnung des UVEK zur Überprüfung des Reinigungseffekts von Massnahmen zur Elimination von organischen Spurenstoffen bei Abwasserreinigungsanlagen bestimmt - die Liste enthält im Jahr 2016 folgende Substanzen: Amisulprid, Benzotriazol, Candersartan, Carbamazepin, Citalopram, Clarithromycin, Diclofenac, Hydrochlorothiazid, Irbesartan, Methylbenzotriazol, Metoprolol und Venlafaxin. Die vorgenannten organischen Spurenstoffe werden im Folgenden auch als Mikroverunreinigungen bezeichnet (d.h. die beiden Begriffe werden vorliegend synonym verwendet).

Die Mikroverunreinigungen gelangen kontinuierlich über die Kanalisationsleitungen in die Abwasserreinigungsanlagen. Mit den derzeit verfügbaren biologischen Reinigungsstufen können sie jedoch nur teilweise oder aber auch gar nicht entfernt werden. So können die Mikroverunreinigungen in die Oberflächengewässer gelangen, wo sie auch bei sehr tiefen Konzentrationen schädlich sein können.

Anerkannte und bewährte Technologien zur Elimination von Mikroverunreinigungen aus dem Abwasser umfassen grundsätzlich die Oxidation mit Ozon bzw. Ozon-Dosierung und die Adsorption mit Pulveraktivkohle (PAK).

Ein zentraler Aspekt bei der Elimination von Mikroverunreinigungen mittels Ozon oder Pulveraktivkohle ist die bedarfsgerechte Zugabe des Ozons oder der Pulveraktivkohle zur Erreichung der geforderten Eliminationsleistung. Im Folgenden wird konkret die Zugabe von Ozon beschrieben; das Gleiche gilt aber auch für die PAK-Zugabe.

Einerseits kann bei einer zu geringen Ozonzugabe die erforderliche Eliminationsleistung nicht erreicht werden, andererseits sind Ozonüberschüsse trotz höherer Eliminationsleistung unerwünscht, da sie zu Mehrkosten führen und zu einem Ozonaustrag im Auslauf des Ozonreaktors führen können. Zusätzlich steigt mit Ozonüberschüssen das Risiko der Bromatbildung (Bromat ist potenziell karzinogen und wird proportional zur Ozonkonzentration gebildet), bei Bromid im Zulauf der Kläranlage. Die Steuerung bzw. Regelung der Ozonproduktion ist deshalb zentral für eine optimierte Elimination der Mikroverunreinigungen.

Anders als bei einer Steuerung, die keine Kontrolleinrichtung für das Erreichen der Soll-Grösse besitzt, wird bei einer Regelung die Soll-Grösse permanent mit der Ist-Grösse (Eingangs- und Ausgangsgrösse) verglichen. Auf diese Weise wird bei einer Regelung sichergestellt, dass die Soll-Grösse erreicht wird und konstant bleibt.

Diverse Versuche in der Praxis haben gezeigt, dass die Messung der Absorption des Lichtes im UV-Bereich (bzw. die Messung des spektralen Absorbtionskoeffizienten SAK) grundsätzlich für die Steuerung bzw. Regelung der Ozondosierung und für die Beurteilung bzw. Kontrolle der Reinigungsleistung einer Abwasserreinigungsanlage vielversprechend ist.

Bei der UV-Messtechnik wird ein pulsierendes UV-Licht in einen Messabschnitt eingestrahlt und das das Wasser durchdringende, nicht absorbierte Licht gemessen. Je höher die Absorption des Lichts im Messabschnitt ist, desto höher ist die Konzentration von absorbierenden Fremdstoffen im Wasser. Die entsprechende Masseinheit ist E/m (Extinktion pro Meter) oder 1/m. Für die Messung organischer Stoffe hat sich dabei Licht mit einer Wellenlänge von 254 nm als geeignet erwiesen. Viele organische Moleküle, zum Beispiel solche mit Doppelbindungen, absorbieren Licht mit dieser Wellenlänge. Die Absorption kann somit als Summenparameter zur Messung der organischen Stoffe verwendet werden. Während des Oxidationsprozesses im Ozonreaktor werden unter anderem Doppelbindungen zerstört. Die UV-Absorption im Auslauf des Ozonreaktors (UV_{OUT}) ist daher schwächer als in dessen Einlauf (UV_{IN}). In Praxisversuchen mit unterschiedlichen Ozondosen konnte die Elimination der Leitsubstanzen mit dem ΔUV-Wert (d.h. der relativen Differenz zwischen dem UV_{IN} und UV_{OUT} Messwert) korreliert werden.

Bekannte Steuer- und Regelstrategien zur Ozondosierung umfassen die drei nachfolgend beschriebenen Ansätze: Bei der «Q-Steuerung» wird zunächst mit Messungen die mittlere Konzentration an gelöstem organischem Kohlenstoff (DOC bzw. Dissolved Organic Carbon) bestimmt und in Stufenversuchen ein anlagenspezifischer (fixer) Ausgangswert für eine geeignete Ozondosis (in gO₃/m³) festgelegt. Durch Multiplikation dieses fixen Ausgangswertes mit der zufliessenden Wassermenge (dem Volumenstrom) wird dann die Ozonzugabe (in kgO3/h) errechnet. Diese Art der Steuerung ist zwar einfach im Betrieb und in der Anwendung, sie liefert allerdings keine konstante EMV. Vielmehr wurde in Praxisversuchen eine Schwankungsbreite des EMV zwischen 80% und >96% festgestellt, wobei aber auch Werte <80% festgestellt wurden. Der fixe Ausgangswert muss hier also sehr hoch angesetzt werden, um die geforderte Mindest-EMV von 80% sicher gewährleisten zu können - was dann ggf. zu ungewünschten hohen Ozondosierungen führt.

Bei der «UV_{IN} Steuerung» handelt es sich um eine frachtproportionale Steuerung, welche UV_{IN} Messwerte anstelle von DOC-Messwerten verwendet. Der wiederum anlagenspezifische (fixe) Ausgangswert wird dabei mit einem Faktor UV_{IN,IST} / UV_{IN,MITTEL} multipliziert, wobei der Wert UV_{IN}, _{MITTEL} zuvor ermittelt wurde. Unter Einbezug des Volumenstroms rechnet die Steuerung dies in die Ozonzugabe (in kgO3/h) um. Bei dieser Steuerung werden die Änderungen der DOC-Konzentration und deren Zusammensetzung im Zulauf des Ozonreaktors mit dem UV_{IN,IST} berücksichtigt, allerdings liefert auch diese Methode keine konstante EMV. In Praxisversuchen wurde eine Schwankungsbreite des EMV zwischen 80% und >94% festgestellt, wobei auch Werte <80% festgestellt wurden. Folglich muss auch hier die Soll-Ozondosierung (d.h. der fixe Ausgangswert) entsprechend hoch angesetzt werden, um die geforderte Mindest-EMV jederzeit gewährleisten zu können. Werte unterhalb der Mindest-EMV werden durch eine zu tief angesetzte Vorgabe für die Soll-Ozondosierung bzw. den fixen Ausgangswert wie auch durch eine ungenügende Berücksichtigung der Wasserinhaltsstoffe durch das verwendete UV-Messprinzip verursacht.

Bei der «ΔUV-Regelung» wird der anlagenspezifische (fixe) Ausgangswert mit einem Faktor ΔUV_{SOLL} / ΔUV_{IST} multipliziert, wobei der Wert ΔUV_{SOLL} der geforderten Mindest-EMV entspricht. Bei dieser Regelung wird die Änderung der DOC-Konzentration und deren Zusammensetzung am Einlauf des Ozonreaktors gegenüber der DOC-Konzentration und deren Zusammensetzung am Auslauf des Ozonreaktors berücksichtigt. Auch diese Methode liefert jedoch noch keine konstante EMV. In Praxisversuchen wurde eine Schwankungsbreite des EMV zwischen 80% und >92% festgestellt, wobei auch Werte <80% festgestellt wurden. Folglich muss wiederum der fixe Ausgangswert entsprechend höher angesetzt werden, um die geforderte Mindest-EMV sicher gewährleisten zu können.

Es bleibt somit festzuhalten, dass bislang kein wirklich praxistaugliches Verfahren mit bedarfsgerechter Ozonzugabe - bei dem Ozonüber- und Unterdosierungen zuverlässig vermieden werden - bereitgestellt werden konnte.

Eine weitere Problematik stellt in der Praxis die relativ schnelle Verschmutzung der UV-Sonden dar und zwar in Gestalt eines Biofilms, welcher sich auf der Sonde bzw. auf deren Messzelle ablagert und zu einem Drift des Messwerts und dadurch zu unstabilen Messwerten führt. Dies wiederum macht häufige und aufwändige manuelle Reinigungen der Sonden erforderlich, da die bekannten Reinigungsangebote nicht ausreichen, um den Messwert dauerhaft exakt zu halten (hierfür darf nämlich die Messungenauigkeit maximal 0,1 E/m betragen, was einem Messfehler von ≤ 1% entspricht). Bei den bislang bekannten Reinigungssystemen werden jeweils die Messsonden entweder mechanisch einzeln gereinigt oder mit Druckluft. Ein weiteres Verfahren verwendet Druckluft und ein Reinigungsmittel wobei mehrere Sonden (mindestens zwei Sonden) gleichzeitig gereinigt werden und die Reinigungsmittel den einfachsten Weg suchen und so die Sonden ungleichmässig gereinigt werden oder aber - im schlimmsten Fall - manche Sonden überhaupt nicht, was wiederum zu einem Drift des Messwerts und somit zu unstabilen Messwerten führt.

In dem Artikel "BEAR: Innovative Regel-Strategie der Ozonung" ist ein Verfahren zur Ozondosierung grob skizziert, welches eine Ozondosierung zur Erzielung einer EMV mit geringen Abweichungen ermöglicht.

Es ist somit die Aufgabe der vorliegenden Erfindung ein Verfahren für die Ozon-/Pulveraktivkohledosierung in einen Ozon-/Pulveraktivkohlereaktor einer Abwassereinigungs- oder Trinkwasseraufbereitungsanlage anzugeben, mit welchem die vorgegebene Mindest-EMV jederzeit zuverlässig gewährleistet und gleichzeitig innerhalb einer minimalen Schwankungsbreite gehalten werden kann (d.h. eine EMV von etwa 82 ± 2%). Weiter ist es Aufgabe der vorliegenden Erfindung ein effizientes Reinigungssystem für die verwendeten Messsonden bereitzustellen. Zudem soll die Erfindung eine kontinuierliche Überwachung der EMV durch den Betreiber ohne aufwändige externe Laboranalytik ermöglichen.

Diese Aufgabe wird gelöst durch ein Verfahren mit den Merkmalen des Anspruchs 1.

Das Verfahren dient zur bedarfsgerechten Ozon- oder Pulveraktivkohle-Dosierung, insbesondere in einen Ozon-/Pulveraktivkohlereaktor einer Abwasserreinigungs- oder Trinkwasseraufbereitungsanlage (Desinfektion und Zerstörung von Viren), bei welchem die gewünschte Eliminationsleistung für Mikroverunreinigungen EMV vorgegeben wird, wobei als Messgrössen die zufliessende Wassermenge Q, ein UV-Absorptionswert UV_{IN} im Einlauf des Ozon-/Pulveraktivkohlereaktors und ein UV-Absorptionswert UV_{OUT} im Auslauf des Ozon-/Pulveraktivkohlereaktors gemessen werden, wobei aus der Differenz der Absorptionswerte UV_{IN} und UV_{OUT} der Wert ΔUV gebildet wird, welcher mit der Eliminationsleistung für Mikroverunreinigungen EMV korreliert und welcher die Ozon-/Pulveraktivkohledosierung bestimmt, wobei beim Auftreten von Störgrössen innerhalb des Ozon-/Pulveraktivkohlereaktors, die die zeitliche Verlaufskurve der Eliminationsleistung für Mikroverunreinigungen EMV in Schwingung versetzen (d.h. wenn Ausschläge auftreten, welche - etwa bei einem der Stand der Technik Verfahren - zu einer Über- oder Unterdosierung bzw. zu einem Verlassen des vorgegebenen EMV-Bereichs geführt hätten), anhand einer wahrscheinlichen Prognose des EMV-Schwingungsverlaufs die Ozon-/Pulveraktivkohledosierung so anpasst wird, dass die vorgegebene EMV eingehalten wird.

Weiterhin wird angegeben ein Reinigungssystem zur Reinigung der Messzellen von Messsonden, welche insbesondere im Bereich vor und/oder nach einem Ozon-/Pulveraktivkohlereaktor einer Abwasserreinigungs- oder Trinkwasseraufbereitungsanlage angeordnet sind, aufweisend zumindest eine Leitung vom Zulauf des Ozonreaktors zu wenigstens einer UV_{IN}-Messsonde; eine Leitung vom Auslauf des Ozonreaktors zu wenigstens einer UV_{OUT}-Messsonde; ein Reinigungsmittelreservoir, welches über zumindest eine Reinigungsleitung einzeln mit jeder der Messsonden verbindbar ist; und eine Druckluftvorrichtung, welche ebenfalls über die zumindest eine Reinigungsleitung einzeln mit jeder der Messsonden verbindbar ist.

Das erfindungsgemässe Verfahren (auch als BEAR-Algorithmus bezeichnet, wobei BEAR für Best Elimination Analysis monitoRing steht), welches bevorzugt mit internem Online-Monitoring durchgeführt wird, ermöglicht also einerseits die Vorgabe der Eliminationsleistung und zugleich entspricht das Ergebnis der Vorgabe, so dass praktisch eine konstante EMV erreicht wird. Hierdurch kann auf aufwendige Laboranalysen mittels Gaschromatographen verzichtet werden, denn das Verfahren überwacht sich selbst und die Ozondosierung erfolgt bedarfsgerecht. Dies bedeutet, dass es weder zu einer Überdosierung, die ggf. zu Oxidationsnebenprodukten führt, noch zu einer Unterdosierung, mit einer entsprechend unzureichenden Eliminationsleistung kommt. Die vorgeschriebene Eliminationsleistung wird vielmehr mit einem Minimalaufwand an Ressourcen erreicht. Infolge des entsprechend geringeren Ozonbedarfs können 20 % Energie in Form von Strom eingespart werden, der Sauerstoffbedarf ist entsprechend geringer und somit u.a. auch die benötigte Kühlwassermenge.

Die Laboranalytik, die für die Behörden mehrmals pro Jahr durchgeführt werden müssen, können gleichzeitig für die Qualitätskontrolle des erfindungsgemässen Online-Verfahrens herangezogen werden.

Im Gegensatz zu den bekannten Regelungen und Steuerungen ist das erfindungsgemässe Verfahren in der Lage zu agieren statt bloss zu reagieren (sinkt etwa bei der bekannten ΔUV-Steuerung der ΔUV_{IST}-Wert unter den ΔUV_{SOLL}-Wert, wird mehr Ozon dosiert und umgekehrt - das Ergebnis ist dann keine konstante EMV, weil die Reaktion auf das Messergebnis erfolgt).

In einer bevorzugten Ausführungsform des erfindungsgemässen Verfahrens werden als Störgrössen Schwankungen der zufliessenden Wassermenge Q, Schwankungen des UV_{IN}-Werts, Schwankungen der Wasserinhaltsstoffe und/oder Schwankungen der Wassertemperatur antizipiert.

Veränderungen der zufliessenden Wassermenge ergeben sich etwa aufgrund von Trockenwetter, Regenwetter, Tagesspitzen im Wasserverbrauch sowie einem Nachtminimum im Wasserverbrauch.

Der UV_{IN}-Wert, für sich alleine genommen, korreliert nur teilweise mit dem DOC-Gehalt im Wasser, was zu Über- und Unterdosierungen führt.

Veränderungen hinsichtlich der Wasserinhaltstoffe können sich ergeben im Zusammenhang mit der vorgeschalteten biologischen Reinigung, der Zusammensetzung des Rohabwassers und der diversen Leitsubstanzen, der internen Rückführung von Prozesswässern in die biologische Reinigung sowie mit den Sommer- und Wintermonaten und den Ferienzeiten. Beispielsweise führen erhöhte Nitritgehalte im Wasser zu einem deutlich gesteigerten Ozonverbrauch. Ebenfalls wird der Einfluss der Temperatur berücksichtigt.

All die vorgenannten Faktoren sind Störgrössen, die die Eliminationsleistungs-Kurve in Schwingung versetzen, d.h. für eine bedarfsgerechte Ozondosierung sind diese Störgrössen zu berücksichtigen.

Gemäß dem erfindungsgemäßen Verfahren wird anhand der zeitlichen Änderung der Steigung der EMV-Schwingungskurve die Auswirkung einer Störung erfasst. Dies führt dazu, dass mittels des erfindungsgemässen Verfahrens die Auswirkung einer Störung bereits erfasst wird, bevor sie sich im Endergebnis als Unter- oder Überdosierung auswirkt. Das bekannte ΔUV-Verfahren nimmt dagegen die für UV_{IN} und UV_{OUT} gemessenen Werte als zeitgleich an, so dass sich keine konstante Eliminationsleistung ergeben kann. Tatsächlich wird das ΔUV aus zeitlich unterschiedlichen Messwerten gebildet, was erstmalig durch das erfindungsgemässe Verfahren antizipiert wird. Mit anderen Worten ermittelt das erfindungsgemässe Verfahren die vorzunehmende Korrektur der Ozondosis, damit das zeitlich später messbare EMV-Ergebnis konstant bleibt. Dies geschieht, indem der Verlauf der EMV berücksichtigt und die Ozondosis vorausschauend angepasst wird.

Gemäß dem erfindungsgemässen Verfahren umfassen weitere Messgrössen, welche zur Anpassung der Ozon-/Pulveraktivkohledosierung im Hinblick auf die gewünschte Eliminationsleistung EMV herangezogen werden können, (zusätzlich) eine Nitrit-Messung, eine Redox-Messung, eine Messung der Restozonkonzentration im Offgas des Ozonreaktors (ROK), eine DOC-Messung und eine Kaliummessung (weitere Messungen sind denkbar). Auf diese Weise kann der Verlauf der EMV-Schwingungskurve weiter geglättet bzw. optimiert werden.

In einer weiteren bevorzugten Ausführungsform des erfindungsgemässen Verfahrens werden auch unplausible Abweichungen einer Messgrösse erkannt und antizipiert. Kommt es beispielsweise zu einem kurzen heftigen Anstieg des UV_{IN}-Werts (die häufigste Form eines unplausiblen Werts), etwa in Folge von Schlammflocken oder anderen starken Trübungen im zufliessenden Wasser, so entscheidet das Verfahren bzw. der Algorithmus ob eine Meldung abgesetzt wird, der unplausible Wert ignoriert wird (d.h. der Algorithmus bleibt inaktiv) oder eine Veränderung der Ozondosierung vorgenommen wird.

In einer weiteren bevorzugten Ausführungsform des erfindungsgemässen Verfahrens wird vor der Messung der Messgrössen, insbesondere von UV_{IN} und UV_{OUT}, eine automatische individuelle Reinigung einzelner oder aller Messsonden (bzw. von deren Messzellen) durchgeführt. Dabei ist generell jede Sonde mit einer automatischen spezifischen Reinigung auszurüsten. Die gilt nicht nur für die UV-Sonden, sondern für jeden Messparameter (bzw. dessen Messsonde) der vor und/oder nach dem Ozonreaktor und/oder nach der Nachbehandlung eingesetzt wird, wie etwa Redox, pH, Leitfähigkeit, Temperatur, Kalium etc. Die Reinigung erfolgt vorzugsweise mit einem Reinigungsmittel, z.B. Phosphorsäure und Druckluft, wobei die jeweils verwendete Menge an Reinigungsmittel und die Druckluft individuell (ggf. beruhend auf Erfahrungswerten für jede Sonde) eingestellt werden. Der Druck der Druckluft ist dabei entscheidend dafür, ob die Reinigungswirkung auch vollständig erfolgt und die für das erfindungsgemässe Verfahren erforderliche Messgenauigkeit (Fehlertoleranz: maximal 1 % bzw. 0.1 E/m) erreicht werden kann.

Die Reinigungseinrichtungen der UV-Sonden-Hersteller können bis heute den geforderten stabilen Messwert nicht erbringen. Deshalb hat die Anmelderin die Reinigungsvorrichtung soweit optimiert, dass eine Genauigkeit von 0.1 E/m dauerhaft erreicht wird.

In einer weiteren bevorzugten Ausführungsform des erfindungsgemässen Verfahrens wird bei Bedarf (z.B. nach der Reinigung) ein Messwertabgleich durchgeführt, indem unter Umgehung des Ozon-/Pulveraktivkohlereaktors beispielsweise die UV_{IN}- und die UV_{OUT}-Messsonden mit demselben Wasser beschickt werden, wobei aus einer sich ergebenden Messwertdifferenz ein Eichfaktor E für die Messsonden bestimmt wird (dies wird weiter unten noch im Detail beschrieben). Die sich aus den Umgebungsbedingungen ergebende Messwertdifferenz der Sonden (d.h. die seitens des Lieferanten nicht behebbar ist) kann auf diese Weise ausgeglichen werden. Die Einführung des Eichfaktors bewirkt also, dass jede der Messsonden denselben UV_{IN}- und UV_{OUT}-Messwert (für dasselbe Wasser) herausgibt, so dass vergleichbare ΔUV-Werte und damit letztlich vergleichbare EMV-Messwerte resultieren.

In einer bevorzugten Ausführungsform des Reinigungssystems wird das Reinigungsmittel über zumindest eine Pumpe in die zumindest eine Reinigungsleitung eingebracht und die Druckluft wird über zumindest ein Ventil in die zumindest eine Reinigungsleitung eingebracht. Dies hat sich in der Praxis als besonders effizient im Hinblick auf die automatische Überwachung und den automatischen Betrieb des Reinigungssystems herausgestellt.

In einer weiteren bevorzugten Ausführungsform des Reinigungssystems ist die Menge an Reinigungsmittel sowie der Druck der Druckluft für jede Messsonde individuell einstellbar. Dies ist notwendig, da die Verschmutzungschrakteristika für jede Sonde bzw. für jeden Sondentyp in der Praxis sehr unterschiedlich ausfallen können. Dies gilt nicht nur für die UV-Sonden, sondern für alle weiteren Messgeräte, welche ggf. für die Bestimmung von Redox, pH, Leitfähigkeit, Temperatur, Nitrit und Kalium eingesetzt werden.

In einer weiteren bevorzugten Ausführungsform des Reinigungssystems ist als Reinigungsmittel im Reinigungsmittelreservoir Phosphorsäure vorgesehen. Mit der Phosphorsäure konnte durchwegs eine besonders gute Reinigungsleistung erzielt werden. Alternativ kann beispielsweise aber auch Ameisensäure (oder ein anderes Reinigungsmittel) eingesetzt werden.

In einer weiteren bevorzugten Ausführungsform des Reinigungssystems sind jedenfalls die Messsonden sowie zumindest ein Teil der Reinigungsleitung von einem plattenförmigen Panel umfasst. Auf diese Weise wird eine besonders gute Überwachung des gesamten Reinigungssystems ermöglicht.

In einer weiteren bevorzugten Ausführungsform des Reinigungssystems ist dieses als geschlossenes System ausgebildet. Dies ist aus Sicherheitsgründen, veranlasst, da offene Systeme nicht automatisch mit Phosphorsäure gereinigt werden können.

In einer weiteren bevorzugten Ausführungsform des Reinigungssystems ist eine Bypassleitung vorgesehen, welche die Leitung zu der wenigstens einen UV_{IN}-Messsonde und die Leitung zu der wenigstens einen UV_{OUT}-Messsonde miteinander verbindet. Hierdurch kann der Ozonreaktor umgangen werden und die UV_{IN}- und die UV_{OUT}-Messsonde (n) können mit demselben Wasser beschickt werden, um ggf. aus einer sich ergebenden Messwertdifferenz einen Eichfaktor E für die Messsonden zu bestimmen, mit welchem schliesslich ein Korrekturfaktor für die Messsonden errechnet werden kann.

Der Einbau der Messsonden erfolgt vorzugsweise im Durchlaufsystem, ohne Vorfilter. Weiter vorzugsweise werden die Messsonden mit einer höheren als bisher üblichen Wassermenge (Probenmenge: bevorzugt 3 bis 7 Liter/Minute) beaufschlagt, damit sich weniger rasch der Biofilm auf den Messzellen bilden kann. Des Weiteren entzieht man mittels der erhöhten Durchlaufgeschwindigkeit Schmutzteilen die Möglichkeit, sich im Bereich der Messzelle festzusetzen. Sie werden rasch wieder weitergespült und ein weiterer Vorteil ist, dass bisher störende Luftblasen, welche sich ggf. angesammelt haben, ebenfalls fortgetragen werden.

Die Probenahme-Wassermenge wird vorzugsweise gezielt und kontrolliert in der Menge auf das Messgerät geführt. Bevorzugt wird daher eine Durchflussmessung und eine Regelarmatur im erfindungsgemässen Reinigungssystem vorgesehen.

Die beigefügten Zeichnungen dienen zum Zwecke der Veranschaulichung und illustrieren insoweit lediglich beispielhaft bevorzugte Ausführungsformen der vorliegenden Erfindung.

Es zeigt:
- Fig. 1: eine schematische Darstellung der Ozondosierung und des der Erfindung zugrundeliegenden Messkonzepts;
- Fig. 2: ein Diagramm, welches die Korrelation zwischen dem ΔUV-Wert und dem EMV-Wert wiedergibt (mit BEAR erstellt);
- Fig. 3: ein Schaubild des Grundprinzips des der Erfindung zugrundeliegenden Algorithmus;
- Fig. 4: ein Diagramm, welches eine beispielhafte EMV-Schwingungskurve beginnend mit dem Stand der Technik, dem Übergang zum erfindungsgemässen Verfahren und schliesslich der vollständig bedarfsgerechten Ozon-Dosierung wiedergibt;
- Fig. 5: ein Diagramm, in welchem die Ergebnisse eines in der Praxis durchgeführten Vergleichs für den EMV-Verlauf gemäss den Stand der Technik Verfahren sowie gemäss dem erfindungsgemässen Verfahren gegenübergestellt werden;
- Fig. 6: ein Diagramm, in welchem anhand von beispielhaften Werten ein EMV-Kurvenverlauf gemäss dem Stand der Technik (wahrscheinliche Prognose) und ein EMV-Kurvenverlauf gemäss BEAR übereinandergelegt werden;
- Fig. 7: ein Diagramm, welches veranschaulicht, wie BEAR aus der ermittelten Ozonkonzentration gemäss Fig. 6 die Ozonproduktion ermittelt;
- Fig. 8: ein Diagramm, welches veranschaulicht wie mittels BEAR ein unplausibler Messwert UV_{IN} antizipiert wird;
- Fig. 9: eine Darstellung eines vollautomatisierten Reinigungssystems für UV-Sonden und/oder andere Messsonden;
- Fig. 10: ein Schema, welches den Abgleich der UV-Sonden und die Bestimmung des Eich- sowie des Korrekturfaktors veranschaulicht.

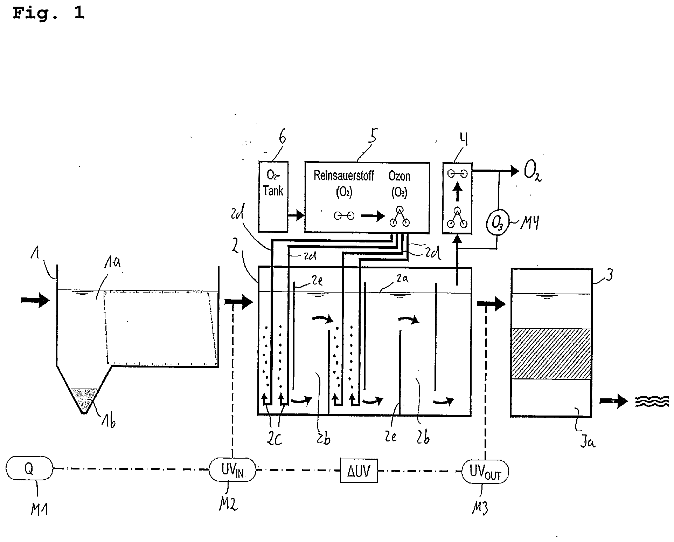

In dem in **Fig. 1** illustrierten Schema kommt zunächst von der (nicht gezeigten) Biologiestufe her biologisch geeinigtes Wasser in das Nachklärbecken 1, wo sich nochmals Sediment bzw. Schlamm 1b absetzt und das biologisch gereinigte Wasser so geklärt wird.

Das biologisch gereinigte und geklärte Wasser 1a fliesst nun in den Ozonreaktor 2. Im vorliegenden Fall wird der Ozonreaktor 2 durch die Trennwände 2e in insgesamt sechs Kammern 2b unterteilt (die Anzahl der Trennwände 2e und Kammern 2b kann allerdings beliebig variiert werden), welche von dem gereinigten und geklärten Wasser durchströmt werden. Dabei werden die Mikroverunreinigungen oxidiert, wobei der Ozoneintrag ins Wasser gegenströmig durch Keramikdiffusoren 2c (vorliegend nur schematisch durch Bläschen angedeutet) erfolgt.

Im vorliegenden Beispiel wird das Ozon in die erste und dritte Kammer 2b von links dosiert, wobei jede der beiden Kammern 2b in der Regel zwei Eingangsstränge 2d mit mehreren daran angeordneten Keramikdiffusoren 2c aufweist. Das Ozon wird aus flüssigem Sauerstoff, welcher in der Sauerstoffversorgung bzw. dem Sauerstofftank 6 gelagert ist, produziert und zwar von einem oder mehreren Ozongenerator(en) 5. Das mit den Ozongeneratoren 5 erzeugte Ozon wird als Gasgemisch, welches auch als «Flux» bezeichnet wird, in den Ozonreaktor 2 eingetragen.

Der Ozonreaktor 2 ist gasdicht geschlossen und das Off-Gas, welches Sauerstoff und eine sehr geringe Restozonkonzentration enthält (<1 bis 3 ppm), wird abgesaugt und im Restozonvernichter 4 behandelt, so dass nur noch Sauerstoff in die Atmosphäre abgegeben wird. Dabei kann der Ozongehalt vor und nach dem Restozonvernichter 4 mittels einer Messvorrichtung M4 kontrolliert werden.

Die im Ozonreaktor 2 entstehenden Oxidationsprodukte im ozonisierten Wasser 2a werden während der anschliessenden Sandfiltration 3 biologisch abgebaut. Anschliessend kann das vollständig gereinigte Wasser 3a aus der Sandfiltration 3 an die Umwelt abgegeben werden. Als Messgrössen für die Ozondosierung verwendet der erfindungsgemässe Algorithmus den Volumenstrom des Wassers Q sowie die UV-Absorption im Zu- und Auslauf des Ozonreaktors 2 (hieraus wird entsprechend der Wert ΔUV gebildet). Der Volumenstrom des Wassers Q wird mit der Messvorrichtung M1 bestimmt und die UV-Absorption im Zu- und Auslauf des Ozonreaktors 2 mit den Messvorrichtungen bzw. Messsonden M2 und M3.

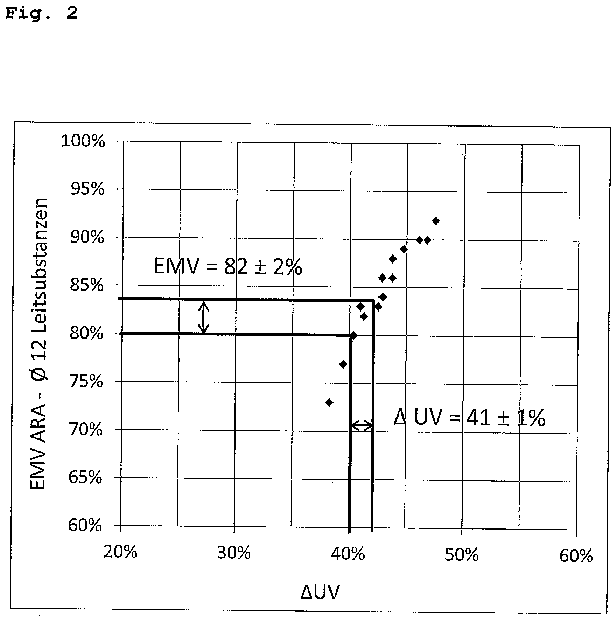

Das in **Fig. 2** gezeigte Diagramm veranschaulicht die Korrelation zwischen dem ΔUV-Wert und dem EMV-Wert, wie sie von der Anmelderin in Praxisversuchen in ihrer Abwasserreinigungsanlage festgestellt wurde. Hierbei wurde jeweils während mindestens vierundzwanzig Stunden ein vordefinierter konstanter ΔUV-Sollwert mit BEAR vorgegeben und die 24h-Mischproben wurden in einem Analytiklabor ausgewertet.

Die Ergebnisse des Versuchs belegen, dass mit dem erfindungsgemässen Algorithmus die Vorgabe des ΔUV-Werts möglich ist und der ΔUV-Wert mit der Eliminationsleistung korreliert. Es konnte zudem für alle zwölf in der Beschreibungseinleitung erwähnten Leitsubstanzen für einen Kläranlage-spezifischen (Abwasser-spezifisch und Sondenspezifisch) ΔUV-Wert von 41 ± 1% eine konstante Eliminationsleistung von 82 ± 2% ermittelt werden. Das Gleiche gilt bei der Verwendung von Pulveraktivkohle.

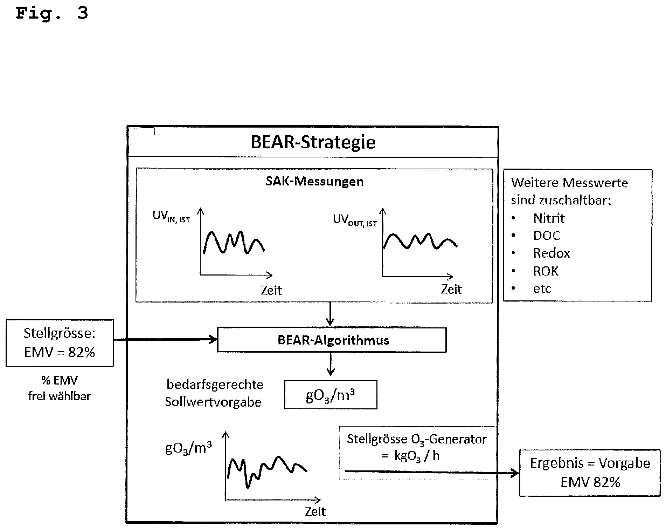

Das Schaubild gemäss **Fig. 3** veranschaulicht das Grundprinzip des erfindungsgemässen Algorithmus. Der Algorithmus berechnet die benötigte Ozonkonzentration, um die vorgegebene Eliminationsleistung (EMV) zu erreichen, ohne dass es dabei zu einer Ozonüberdosierung oder einer Ozonunterdosierung kommt. Der Algorithmus bezieht die Reaktionen des Ozons mit den im Wasser gelösten Stoffen in die Berechnungen ein. So kann der Ozonbedarf fortlaufend angepasst und die Eliminationsleistung konstant gehalten werden.

Auf diese Weise kann eine Reduktion des Ozonverbrauchs um 20% erzielt werden. Die Ist-Messung des spektralen Absorptionskoeffizienten (SAK) erfolgt jeweils entsprechend im Zu- und Auslauf des Ozonreaktors. Als weitere Messwerte, welche in den Algorithmus einbezogen werden können, wären beispielsweise Nitrit, DOC, Redox, ROK, etc. zu nennen.

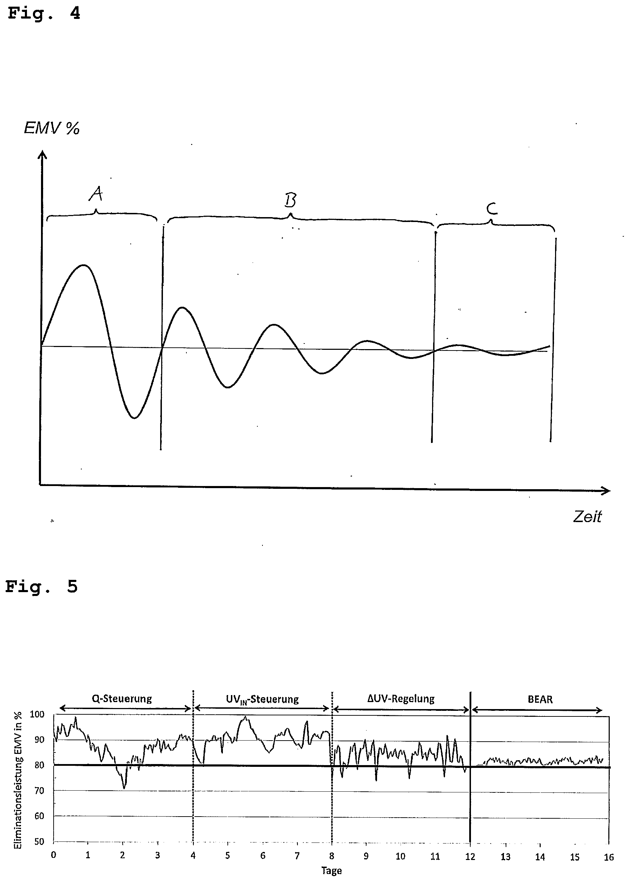

In dem Diagramm gemäss **Fig. 4** wird schematisch illustriert, wie die EMV-Schwingungskurve sich ausgehend von einem Stand der Technik-Verfahren zur Ozondosierung im Lauf der Zeit verändert, wenn das erfindungsgemässe Verfahren bzw. der erfindungsgemässe Algorithmus zum Einsatz kommt. Der mit A gekennzeichnete Bereich zeigt eine EMV-Amplitude (bzw. Schwingung) mit einem relativ grossen Ausschlag, wie sie sich gemäss einem Stand der Technik Verfahren ergibt.

In der Praxis führt ein derartiger Kurvenverlauf regelmässig zu Über- und Unterdosierungen von Ozon. In dem mit B gekennzeichneten Bereich wird nun das erfindungsgemässe Verfahren bzw. der erfindungsgemässe Algorithmus gestartet. Es wird also mit der bedarfsgerechten Ozondosierung begonnen, so dass sich die Ausschläge der EMV-Schwingungskurve abzuschwächen beginnen bzw. gedämpft werden.

Dabei wird beim Auftreten von Störgrössen innerhalb des Ozonreaktors, welche die zeitliche Verlaufskurve der Eliminationsleistung für Mikroverunreinigungen EMV in Schwingung versetzen (d.h. wenn Ausschläge auftreten, welche - etwa bei einem der Stand der Technik Verfahren - zu einer Über- oder Unterdosierung bzw. zu einem Verlassen des vorgegebenen EMV-Bereichs geführt hätten) anhand einer wahrscheinlichen Prognose des EMV-Schwingungsverlaufs die Ozondosierung so anpasst, dass die vorgegebene EMV eingehalten wird.

Die wahrscheinliche Prognose des EMV-Schwingungsverlaufs wird hierbei aus der zeitlichen Änderung der Steigung der EMV-Schwingungskurve abgeleitet.

Der Algorithmus verwendet im Gegensatz zu den Steuerungen und Regelungen beim Stand der Technik keine fixen vorgegeben Werte. Er benötigt demnach auch keinen vorher bestimmten spezifischen fixen Anlagenwert, der aufwändig durch Versuche ermittelt werden muss. Der Algorithmus ermittelt die Werte, die momentan zur Erreichung des gewünschten Endergebnisses benötigt werden. Dies heisst, die Abkehr von fixen Werten zu stets variablen Werten für die Berechnung der benötigen Ozonmenge zeichnet den Algorithmus aus. Die Werte sind variabel wie auch die Zeiten in denen ein Wert aktiv ist.

Dies bedingt ebenso, dass je nach Messsignalstärke die Werte (die vom Algorithmus jeweils ermittelte bedarfsgerechte Ozon-Konzentration in unterschiedlich sein können und zudem sich auf einen andern Wert in der Berechnung auswirken können.

Die Ozonmenge wird demnach von einzelnen Berechnungen, von miteinander wirkenden und auch von Berechnungen, die die Ursprungsberechnungen beeinflussen, bestimmt.

Das Endergebnis ist eine konstante dauerhafte Eliminationsleistung.

In dem mit C gekennzeichneten Bereich wird der Verlauf EMV-Schwingungskurve mit nunmehr vollständiger bedarfsgerechter Ozondosierung illustriert. Die Ausschläge sind nur noch minimal, so dass auch ein enger vorgegebener EMV-Bereich eingehalten werden kann.

Das in **Fig. 5** gezeigte Diagramm, stellt die Ergebnisse eines von der Anmelderin über sechzehn Tage durchgeführten Vergleichs für den EMV-Verlauf gemäss den in der Beschreibungseinleitung diskutierten Stand der Technik Verfahren sowie gemäss dem erfindungsgemässen Verfahren gegenüber.

Man erkennt, dass bei der Q-Steuerung die Schwankungsbreite der EMV-Kurve am grössten ist. Diese Art der Steuerung ist zwar einfach im Betrieb und in der Anwendung, sie liefert allerdings keine konstante EMV. Vielmehr wurde eine Schwankungsbreite des EMV zwischen 80% und >96% festgestellt, wobei aber auch Werte um die 70% (s. Tag 2 im Diagramm) festgestellt wurden.

Bei der UV_{IN}-Steuerung werden die Änderungen der DOC-Konzentration und deren Zusammensetzung im Zulauf des Ozonreaktors mit dem UV_{IN,IST} berücksichtigt. Allerdings liefert auch diese Methode keine konstante EMV. Es wurde eine Schwankungsbreite des EMV zwischen 80% und >94% festgestellt, wobei auch Werte <80% (s. Tag 8 im Diagramm) festgestellt wurden.

Bei der ΔUV-Regelung wird (nur) die Änderung der DOC-Konzentration und deren Zusammensetzung am Einlauf des Ozonreaktors gegenüber der DOC-Konzentration und deren Zusammensetzung am Auslauf des Ozonreaktors berücksichtigt. Auch diese Methode liefert jedoch noch keine konstante EMV. In Praxisversuchen wurde eine Schwankungsbreite des EMV zwischen 80% und >92% festgestellt, wobei relativ häufig auch Werte <80% (s. Tage 8, 9, 10 und 11 im Diagramm) festgestellt wurden.

Erst mit dem vorstehend beschriebenen, erfindungsgemässen Verfahren (bzw. dem BEAR-Algorithmus) kann sicher eine konstante Eliminationsleistung in einem vorgewählten Bereich von z.B. 82 ± 2% EMV gewährleistet werden (s. Tage 12 bis 16 im Diagramm).

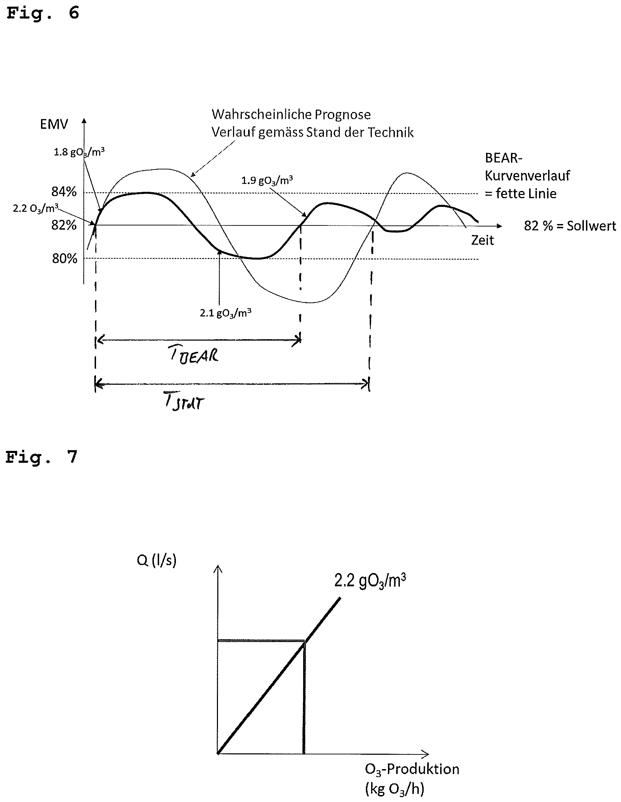

Wird, wie in **Fig. 6** gezeigt, die Elimination der Mikroverunreinigungen (EMV) gemäss den aus dem Stand der Technik bekannten Steuerungen und/oder Regelungen betrieben, ergibt sich der anhand der feinen Kurvenlinie dargestellte EMV-Verlauf, welcher vorliegend als «wahrscheinliche Prognose» bezeichnet wird.

Aus **Fig. 6** erkennt man, dass die wahrscheinliche Prognose und die EMV-Elimination gemäss BEAR zu Beginn gleich verlaufen (d.h. beide Kurven steigen an). Der Anstieg ist ein Indiz dafür, dass zu viel Ozon dosiert wird. Der BEAR-Algorithmus (dicke Kurvenlinie) ermittelt aus den Messdaten die notwendige Ozondosis, um den Verlauf der wahrscheinlichen Prognose zu dämpfen. Dazu wird die Ozonkonzentration verändert, nämlich auf 1,8 gO3/m³, wie aus dem Diagramm ersichtlich. Vor der Veränderung betrug die Ozonkonzentration 2,2 gO3/m³.

Durch die die Veränderung der Ozonkonzentration nehmen die Kurven gemäss BEAR und gemäss der wahrscheinlichen Prognose nun einen unterschiedlichen Verlauf, wie es in dem Diagramm veranschaulicht wird.

Der starke Anstieg der Kurven zu Beginn bedeutet, dass zu viel Ozon eingetragen wird und die Elimination ggf. über das gewünschte SOLL von 82 % ansteigt. Mit der Verringerung der Ozondosis wurde jedoch mittels BEAR der Anstieg gebremst bzw. gedämpft.

Des Weiteren erkennt man aus dem Diagramm, dass der Kurvenverlauf («wahrscheinliche Prognose») gemäss den Stand der Technik Steuerungen und/oder Regelungen über die 84 % Marke ansteigt und sich auf einem höheren Niveau einpendelt.

Mit dem BEAR-Algorithmus kann aber nicht nur die Eliminationsleistung nach oben oder nach unten gebremst bzw. gedämpft werden, es kann darüber hinaus auch die Periodendauer der Schwingung verkürzt werden (d.h. T_{BEAR} < T_{STdT}). Auf diese Weise kann der Schwingungsverlauf weiter gedämpft werden. Dies ist kann mit den Steuerungen und/oder Regelungen gemäss dem Stand der Technik nicht erreicht werden.

Die Regelungsschritte die mit BEAR unternommen werden müssen, um das gewünschte Resultat zu erreichen sind in **Fig. 6** beispielhaft anhand der vier Pfeile für die Ozonkonzentrationen 2,2 gO3/m³, 1,8 gO3/m³, 2,1 gO3/m³ und 1,9 gO3/m³ dargestellt. Hieraus ist ersichtlich, dass die laufende Anpassung der Ozonkonzentration in Abhängigkeit zum Sollwert von 82 % EMV erfolgt und in dem gewünschten Bereich zwischen 80 % und 84 % EMV gehalten werden kann (d.h. 82 ± 2% EMV).

Der BEAR-Algorithmus kann zudem anhand eines modularen Aufbaus verschiedene Messsignale verarbeiten.

Stehen nur die UV_{IN} und UV_{OUT}-Messsignale zur Verfügung, so nimmt er diese, und berechnet daraus den ΔUV-Wert. Der ΔUV-Verlauf entspricht der EMV-Verlaufskurve gemäss **Fig. 6****.**

Erfindungsgemäss stehen weitere Messsignale zur Verfügung (Nitrit, DOC, Offgas, Kalium und Redox), die in weiteren Modulen verarbeitet und mit den anderen eingesetzt werden.

Aus der **Fig. 7** ist ersichtlich, wie der BEAR-Algorithmus aus der ermittelten Ozonkonzentration gemäss **Fig. 6** (beispielhaft: 2,2 gO3/m3) die Ozonproduktion ermittelt. Mit anderen Worten, der BEAR-Algorithmus antizipiert die Ozonproduktion aus dem Verlauf der Kurve gemäss **Fig. 6****.** Die Ozonproduktion (kg O₃/h) erfolgt dabei variabel über die zufliessende Wassermenge Q (1/s). Als Beispiel ist entsprechend in **Fig. 7** die Ozonkonzentration von 2,2 gO3/m³ dargestellt. Infolge der mit dem BEAR-Algorithmus sich stets verändernden Ozonkonzentration verändert sich die Ozonproduktion ebenfalls und zwar in Abhängigkeit von der variablen Wassermenge und der variablen Ozonkonzentration. Dies veranschaulicht, wie der BEAR-Algorithmus aus variablen Werten die notwendige Ozonproduktionsmenge ermittelt.

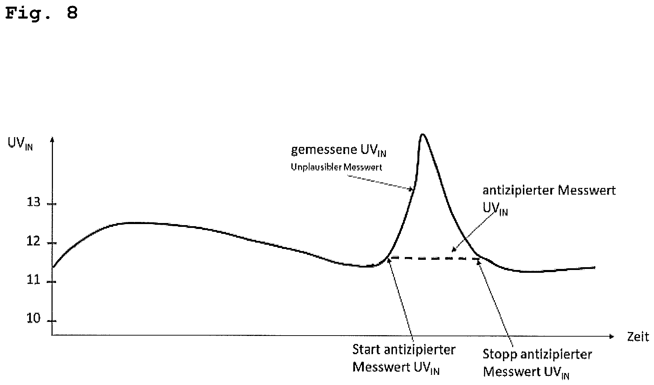

In **Fig. 8** wird veranschaulicht, wie ein unplausibler Messwert UV_{IN} durch den BEAR-Algorithmus antizipiert wird. Ab wann ein Messwert als unplausibel gilt, muss jeweils vorab festgelegt (d.h. im BEAR-Algorithmus hinterlegt) werden.

Grundsätzlich gilt, dass sich die Biomasse in der Biologie träge verhält und keinen starken Schwankungen und Veränderungen unterliegt. Somit kann der UV_{IN} grundsätzlich zeitlich nicht so schnell ansteigen, wie es in **Fig. 8** gezeigt ist. Ein derartig rascher Anstieg des UV_{IN} muss daher durch einen anderen Einfluss erfolgen, wie beispielsweise aufgrund des vermehrten Auftretens von Schlammflocken (etwa wegen starker Regenfälle).

Der unplausible Messwert UV_{IN} wird also dadurch antizipiert, dass ab einer zuvor definierten zeitlichen Veränderung (z.B. Anstieg des UV_{IN} um 30% innerhalb von 3 Minuten) der Anstieg des UV_{IN} durch den BEAR-Algorithmus ignoriert wird und durch den letzten Messwert ersetzt wird (vgl. Pfeil «Start antizipierter Messwert UV_{IN}»). Dies erfolgt so lange, bis der Messwert UV_{IN} wieder zu einem plausiblen bzw. dem plausiblen letzten Wert zurückkehrt (vgl. Pfeil «Stopp antizipierter Messwert UV_{IN}»).

Dasselbe Prinzip kann für die anderen vorerwähnten Messsignale ebenso angewendet werden.

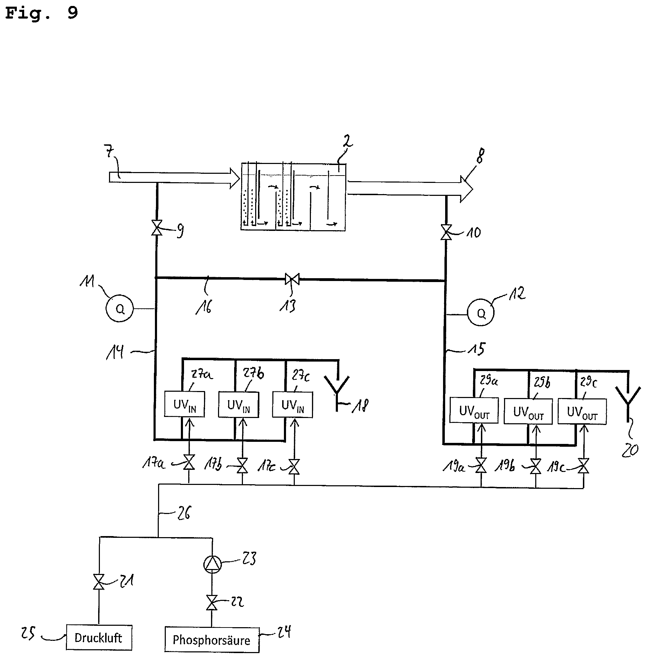

In **Fig. 9** wird das erfindungsgemässe Reinigungssystem für UV-Sonden und/oder anderer Messsonden gezeigt, welches mittels einer Steuerung vollautomatisch betrieben werden kann.

Mit dem Pfeil 7 wird der Zulauf von Wasser aus etwa einem Nachklärbecken zum Ozonreaktor 2 bezeichnet. Der Pfeil 8 steht entsprechend für den Auslauf des ozonisierten Wassers aus dem Ozonreaktor 2. Vom Zulauf des Ozonreaktors 2 führt eine Leitung 14 zu den UV_{IN}-Messsonden 27a, 27b, 27c (diese entsprechen M2 gemäss Fig. 1). Vom Auslauf des Ozonreaktors 2 führt entsprechend eine Leitung 15 zu den UV_{OUT}-Messsonden 29a, 29b, 29c (diese entsprechen M3 gemäss Fig. 1). Über der Ventile 9 bzw. 10 können somit die UV_{IN}-Messsonden 27a, 27b, 27c bzw. die UV_{OUT}-Messsonden 29a, 29b, 29c mit Probewasser beaufschlagt werden.

Der Probewasservolumenstrom kann durch die Messvorrichtungen 11 bzw. 12 bestimmt werden. Stromabwärts von den Messsonden ist jeweils eine Drainage 18 bzw. 20 für das Probenwasser (zurück im Zulauf der Kläranlage) vorgesehen. Über die Reinigungsleitung 26 und die Ventile 17a, 17b, 17c bzw. 19a, 19b, 19c kann jede der UV_{IN}-Messsonden 27a, 27b, 27c bzw. jeder der UV_{OUT}-Messsonden 29a, 29b, 29c einzeln angesteuert werden und mit einer individuellen Menge an Druckluft und/oder Phosphorsäure beaufschlagt werden (d.h. diejenige Menge, welche sich für die jeweilige Sonde bzw. den jeweiligen Sondentyp zum Zwecke der Reinigung als optimal erwiesen hat). Die Phosphorsäure wird mittels des Ventils 22 und der Pumpe 23 aus dem Phosphorsäuretank 24 in die Reinigungsleitung 26 eingebracht. Die Druckluft wird über das Ventil 21 von der Druckluftvorrichtung 25 in die Reinigungsleitung eingebracht.

Die vollautomatisierte und sondenspezifische Reinigungsvorrichtung erlaubt eine effiziente Reinigung und eine dauerhaft hohe Messgenauigkeit für die verwendeten Sonden. Auch die Leitungen 14, 15, 16 und 26 können selbstverständlich individuell und automatisch gereinigt werden.

Die Qualitätssicherung der UV-Messungen erfolgt im Stand der Technik im Übrigen punktuell mit dem Vergleich des UV-Wertes der UV-Sonde mit dem gemessenen Photometer-Wert im Labor der Kläranlage.

Im Rahmen der vorliegenden Erfindung werden dagegen vorzugsweise jeweils drei UV-Sonden im Zulauf (d.h. die Sonden 27a, 27b, 27c) und im Ablauf (d.h. die Sonden 29a, 29b, 29c) des Ozonreaktors 2 parallel eingebaut, um einen kontinuierlichen Vergleich der UV-Messwerte zu gewährleisten. Es können jedoch jeweils auch nur zwei oder aber auch vier und mehr Sonden verwendet werden. Drifts oder Messfehler sind dadurch automatisch schnell erkennbar, damit diese keinen negativen Einfluss auf die Ozonzugabe aufweisen. Falls die Störung die für die Ozonproduktion aktive Sonde betrifft, schaltet der Algorithmus auf eine andere Sonde um.

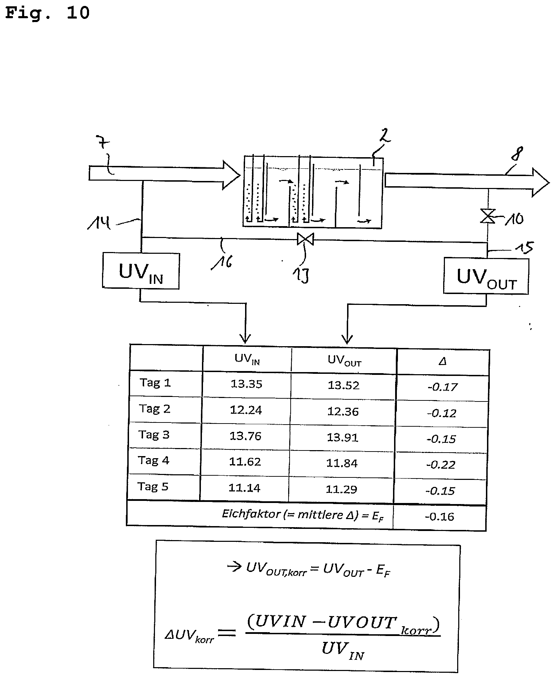

Die **Fig. 10** zeigt schliesslich ein Schema, welches den Abgleich der UV-Sonden und die Bestimmung des Eich- sowie des Korrekturfaktors für die entsprechende Sonde veranschaulicht. Die gezeigte Leitungs- und Messanordnung entspricht, etwas verallgemeinert, der in **Fig. 9** gezeigten Anordnung.

Während des Abgleichvorgangs werden eine oder mehrere (oder alle) Sonden mit demselben Wasser beschickt, d.h. über die Leitung 14 für die UV_{IN}-Seite und über die Bypassleitung 16 und die Leitung 15 (d.h. bei geschlossenem Ventil 10) für die UV_{OUT}-Seite.

In dem fünftägigen Praxisversuch der Anmelderin wurde die Differenz der jeweiligen UV_{IN}- und der UV_{OUT}-Messwerte gemittelt (im vorliegenden Fall diente dabei die UV_{IN}-Sonde als Referenz-Sonde) und so der Eichfaktor E_{F} ermittelt.

Mit dem Eichfaktor E_{F} kann dann mittels der dargestellten Formeln zunächst der Korrekturfaktor UV_{OUT,KORR} für den UV_{OUT}-Messwert bestimmt werden und hiermit schliesslich der Korrekturfaktor ΔUV_{KORR} für die UV_{OUT}-Sonde. Im Ergebnis zeigen dann alle abgeglichenen Sonden denselben Messwert an, nämlich denjenigen der Referenzsonde.

In weiterer Ausgestaltung der Erfindung ist vorgesehen:
(1) Reinigungssystem zur Reinigung der Messzellen von Messsonden, welche insbesondere im Bereich vor und/oder nach einem Ozon-/Pulveraktivkohlereaktor (2) einer Abwasserreinigungs- oder Trinkwasseraufbereitungsanlage angeordnet sind, aufweisend zumindest:
   eine Leitung (14) vom Zulauf (7) des Ozonreaktors (2) zu wenigstens einer UV_{IN}-Messsonde (27a, 27b, 27c);
   eine Leitung (15) vom Auslauf (8) des Ozonreaktors (2) zu wenigstens einer UV_{OUT}-Messsonde (29a, 29b, 29c) ;
   ein Reinigungsmittelreservoir (24), welches über zumindest eine Reinigungsleitung (26) einzeln mit jeder der Messsonden (27a, 27b, 27c; 29a, 29b, 29c) verbindbar ist; und
   eine Druckluftvorrichtung (25), welche ebenfalls über die zumindest eine Reinigungsleitung (26) einzeln mit jeder der Messsonden (27a, 27b, 27c; 29a, 29b, 29c) verbindbar ist.
(2) Reinigungssystem nach Ausgestaltung (1), wobei das Reinigungsmittel über zumindest eine Pumpe (23) in die zumindest eine Reinigungsleitung (26) eingebracht wird.
(3) Reinigungssystem nach Ausgestaltung (1) oder (2), wobei die Druckluft über zumindest ein Ventil (21) in die zumindest eine Reinigungsleitung (26) eingebracht wird.
(4) Reinigungssystem nach einer der Ausgestaltungen (1) bis (3), wobei die Menge an Reinigungsmittel sowie der Druck der Druckluft für jede Messsonde (27a, 27b, 27c; 29a, 29b, 29c) individuell einstellbar ist.
(5) Reinigungssystem nach einer der Ausgestaltungen (1) bis (4), wobei als Reinigungsmittel im Reinigungsmittelreservoir (24) Phosphorsäure vorgesehen ist.
(6) Reinigungssystem nach einer der Ausgestaltungen (1) bis (5), wobei jedenfalls die Messsonden (27a, 27b, 27c; 29a, 29b, 29c) sowie zumindest ein Teil der Reinigungsleitung (26) von einem plattenförmigen Panel umfasst sind.
(7) Reinigungssystem nach einer der Ausgestaltungen (1) bis (6), wobei es als geschlossenes System ausgebildet ist.
(8) Reinigungssystem nach einer der Ausgestaltungen (1) bis (7), wobei eine Bypassleitung (16) vorgesehen ist, welche die Leitung (14) zu der wenigstens einen UV_{IN}-Messsonde (27a, 27b, 27c) und die Leitung (15) zu der wenigstens einen UV_{OUT}-Messsonde (29a, 29b, 29c) miteinander verbindet.

### Bezugszeichenliste:

- 1: Nachklärbecken
- 1a: biologisch gereinigtes Wasser
- 1b: Schlamm
- 2: Ozonreaktor
- 2a: ozonisiertes Wasser
- 2b: Kammern
- 2c: Diffusoren
- 2d: Eintragsstränge
- 2e: Trennwände
- 3: Sandfiltration
- 3a: vollständig gereinigtes Wasser
- 4: Restozonvernichter
- 5: Ozongenerator
- 6: Sauerstofftank
- 7: Pfeil (Zulauf Ozonreaktor)
- 8: Pfeil (Auslauf Ozonreaktor)
- 9: Ventil
- 10: Ventil
- 11: Messvorrichtung (Volumenstrommessung)
- 12: Messvorrichtung (Volumenstrommessung)
- 13: Ventil
- 14: Leitung zu UV_{IN}-Sonden
- 15: Leitung zu UV_{OUT}-Sonden
- 16: Bypassleitung
- 17a: Ventil
- 17b: Ventil
- 17c: Ventil
- 18: Drainage
- 19a: Ventil
- 19b: Ventil
- 19c: Ventil
- 20: Drainage
- 21: Ventil
- 22: Ventil
- 23: Pumpe
- 24: Phosphorsäuretank
- 25: Druckluft
- 26: Reinigungsleitung
- 27a: UV_{IN}-Sonde
- 27b: UV_{IN}-Sonde
- 27c: UV_{IN}-Sonde
- 29a: UV_{OUT}-Sonde
- 29b: UV_{OUT}-Sonde
- 29c: UV_{OUT}-Sonde
- A: linker Bereich EMV-Schwingungskurve
- B: mittlerer Bereich EMV-Schwingungskurve
- C: rechter Bereich EMV-Schwingungskurve
- M₁: Messvorrichtung Volumenstrom
- M₂: Messsonde UV_{IN}
- M₃: Messsonde UV_{OUT}
- M₄: Messvorrichtung Restozon
- T_{BEAR}: Periodendauer gemäss BEAR
- T_{STdT}: Periodendauer gemäss dem StdT

## Patentansprüche

1. Verfahren zur bedarfsgerechten Ozon- oder Pulveraktivkohle-Dosierung, insbesondere in einen Ozon-/Pulveraktivkohlereaktor (2) einer Abwasserreinigungs- oder Trinkwasseraufbereitungsanlage, bei welchem die gewünschte Eliminationsleistung für Mikroverunreinigungen EMV vorgegeben wird, das Verfahren umfassend die Schritte:
- Ermitteln von variablen Werten zur Berechnung einer benötigten Ozonmenge, wobei als Messgrössen die zufliessende Wassermenge Q, ein UV-Absorptionswert UV_{IN} im Einlauf (7) des Ozon-/Pulveraktivkohlereaktors und ein UV-Absorptionswert UV_{OUT} im Auslauf (8) des Ozon-/Pulveraktivkohlereaktors gemessen werden und weitere Messgrössen, welche zur Anpassung der Ozon-/Pulveraktivkohledosierung im Hinblick auf die gewünschte Eliminationsleistung EMV herangezogen werden, eine Nitrit-Messung, eine Redox-Messung, eine Messung der Restozonkonzentration im Offgas des Ozonreaktors, eine DOC-Messung und eine Kaliummessung,
wobei aus der Differenz der Absorptionswerte UV_{IN} und UV_{OUT} der Wert ΔUV gebildet wird, welcher mit der Eliminationsleistung für Mikroverunreinigungen EMV korreliert und welcher die Ozon-/Pulveraktivkohledosierung bestimmt;
- Berechnen der benötigten Ozonmenge bzw. Pulveraktivkohlemenge aus den variablen Werten und aus variablen Zeiten, in denen die jeweiligen variablen Werte aktiv sind, wobei Reaktionen des Ozons bzw. der Pulveraktivkohle mit im Wasser gelösten Stoffen in die Berechnungen mit einbezogen werden; und
- Anpassen der Ozon-/Pulveraktivkohledosierung anhand der berechneten Ozonmenge bzw. Pulveraktivkohlemenge, sodass Ausschläge der EMV-Schwingungskurve abgeschwächt und/oder gedämpft werden, wobei beim Auftreten von Störgrössen, d.h. bei Schwankungen der zufliessenden Wassermenge Q, Schwankungen des UV_{IN}-Werts, Schwankungen der Wasserinhaltsstoffe und/oder Schwankungen der Wassertemperatur, innerhalb des Ozon-/Pulveraktivkohlereaktors (2), die die zeitliche Verlaufskurve der Eliminationsleistung für Mikroverunreinigungen EMV in Schwingung versetzen, anhand einer zeitlichen Änderung der Steigung der EMV-Schwingungskurve die Auswirkung einer Störung bereits erfasst wird, bevor sie sich im Endergebnis als Unter- oder Überdosierung auswirkt, die Ozon-/Pulveraktivkohledosierung so angepasst wird, dass die vorgegebene EMV eingehalten wird.

2. Verfahren gemäss einem der Ansprüche 1, **dadurch gekennzeichnet, dass** auch eine unplausible Abweichung der Messgrösse UV_{IN} erkannt und antizipiert wird, indem ab einer zuvor definierten zeitlichen Veränderung der Anstieg des UV_{IN} so lange ignoriert und durch den letzten Messwert ersetzt wird, bis der Messwert UV_{IN} wieder zu einem plausiblen Wert zurückkehrt.

3. Verfahren nach einem der Ansprüche 1 bis 2, **dadurch gekennzeichnet, dass** vor der Messung der Messgrössen, insbesondere von UV_{IN} und UV_{OUT}, eine automatische individuelle Reinigung einzelner oder aller Messsonden durchgeführt wird.

4. Verfahren nach Anspruch 3, **dadurch gekennzeichnet, dass** bei Bedarf ein Messwertabgleich durchgeführt wird, indem unter Umgehung des Ozon-/Pulveraktivkohlereaktors die UV_{IN}- und die UV_{OUT}-Messsonden mit demselben Wasser beschickt werden, wobei aus einer sich ergebenden Messwertdifferenz ein Eichfaktor E_{F} für die Messsonden bestimmt wird.

## Claims

1. Method for the needs-based metering of ozone or powdered activated carbon, in particular into an ozone/powdered activated carbon reactor (2) of a wastewater treatment or water purification plant, in which the desired elimination efficiency for micropollutants EMV is predefined, the method comprising the steps of:
- determining variable values for calculating a required quantity of ozone, wherein, as measured variables, the inflowing quantity of water Q, a UV absorption value UV_{IN} in the inlet (7) of the ozone/powdered activated carbon reactor and a UV absorption value UV_{OUT} in the outlet (8) of the ozone/powdered activated carbon reactor are measured, also further measured variables, which are used to adapt the metering of ozone/powdered activated carbon with regard to the desired elimination efficiency EMV, a nitrite measurement, a redox measurement, a measurement of the residual ozone concentration in the off-gas of the ozone reactor, a DOC measurement and a potassium measurement,
wherein from the difference between the absorption values UV_{IN} and UV_{OUT} the value ΔUV is generated, which correlates to the elimination efficiency for micropollutants EMV and which determines the metering of ozone/powdered activated carbon;
- calculating the required quantity of ozone or quantity of powdered activated carbon from the variable values and from variable times in which the respective variable values are active, wherein reactions of the ozone or of the powdered activated carbon with substances dissolved in the water are factored into the calculations; and
- adapting the metering of ozone/powdered activated carbon using the calculated quantity of ozone or quantity of powdered activated carbon, with the result that amplitudes of the EMV oscillation curve are attenuated and/or damped, wherein when disturbance variables occur, i.e. in the case of fluctuations of the inflowing quantity of water Q, fluctuations of the UV_{IN} value, fluctuations of the substances in the water and/or fluctuations of the water temperature, inside the ozone/powdered activated carbon reactor (2), which cause the temporal progression curve of the elimination efficiency for micropollutants EMV to oscillate, the effect of a disruption is already detected with reference to a time rate of change of the slope of the EMV oscillation curve before it has an effect in the end result as an under- or overmetering, the metering of ozone/powdered activated carbon is adapted such that the predefined EMV is maintained.

2. Method according to one of claims 1, **characterized in that** an implausible deviation of the measured variable UV_{IN} is also recognized and anticipated **in that**, from a previously defined time rate of change, the rise of the UV_{IN} is ignored and replaced with the last measured value, until the measured value UV_{IN} returns to a plausible value again.

3. Method according to one of claims 1 to 2, **characterized in that** an automatic individual cleaning of individual or all measuring probes is carried out before the measured variables are measured, in particular UV_{IN} and UV_{OUT}.

4. Method according to claim 3, **characterized in that** an adjustment of measured values is carried out as required, **in that** the UV_{IN} and the UV_{OUT} measuring probes are charged, bypassing the ozone/powdered activated carbon reactor, with the same water, wherein a calibration factor E_{F} is determined for the measuring probes from a resultant measured value difference.

## Revendications

1. Procédé de dosage d'ozone ou de charbon actif en fonction des besoins, notamment dans un réacteur à ozone-charbon actif (2) d'une installation de nettoyage des eaux usées ou de préparation de boisson, dans lequel la puissance d'élimination souhaitée des micro-impuretés EMV est prédéfinie, le procédé comprenant les étapes suivantes :
- détermination de valeurs variables pour le calcul d'une quantité d'ozone nécessaire, les grandeurs de mesure mesurées étant la quantité d'eau s'écoulant Q, une valeur d'absorption des UV UV_{IN} à l'entrée (7) du réacteur à ozone-charbon actif et une valeur d'absorption des UV UV_{OUT} à la sortie (8) du réacteur à ozone-charbon actif et les grandeurs de mesure supplémentaires utilisées pour adapter le dosage d'ozone-charbon actif en terme de puissance d'élimination souhaitée des micro-impuretés EMV étant une mesure des nitrites, une mesure de l'oxydo-réduction, une mesure de la concentration en ozone résiduel dans le gaz d'échappement du réacteur à ozone, une mesure DOC et une mesure du potassium ;
la valeur ΔUV étant formée à partir de la différence des valeurs d'absorption UV_{IN} et UV_{OUT} corrélée à la puissance d'élimination des micro-impuretés EMV et définissant le dosage d'ozone-charbon actif ;
- calcul de la quantité d'ozone et/ou de la quantité de charbon actif en poudre nécessaires à partir des valeurs variables et à partir des durées variables pendant lesquelles les valeurs variables respectives sont actives, les réactions de l'ozone et/ou du charbon actif en poudre avec les substances dissoutes dans l'eau étant prises en compte dans les calculs ; et
- adaptation du dosage d'ozone-charbon actif à l'aide de la quantité d'ozone et/ou de la quantité de charbon actif en poudre calculées, de sorte que les déviations de la courbe d'oscillation des micro-impuretés EMV sont atténuées et/ou infléchies, sachant qu'en présence de grandeurs perturbatrices, c'est-à-dire en cas d'écarts dans la quantité d'eau s'écoulant Q, d'écarts dans la valeur UV_{IN}, d'écarts dans les substances contenues dans l'eau et/ou d'écarts dans la température de l'eau à l'intérieur du réacteur à ozone-charbon actif (2) tels qu'ils font osciller la courbe dans le temps de la puissance d'élimination des micro-impuretés EMV, les effets d'une perturbation sont déjà détectés grâce à la variation dans le temps de la pente de la courbe d'oscillation des micro-impuretés EMV avant de se répercuter dans le résultat final sous la forme d'un sous ou d'un surdosage, le dosage d'ozone-charbon actif étant alors adapté de façon à maintenir le seuil souhaité de micro-impuretés EMV.

2. Procédé selon l'une quelconque des revendications 1, **caractérisé en ce qu'**un écart non plausible par rapport à la grandeur de mesure UV_{IN} est également détecté et anticipé en ignorant à partir d'une variation dans le temps précédemment définie la hausse de la grandeur UV_{IN} et en la remplaçant par la dernière valeur de mesure tant que la valeur de mesure UV_{IN} est de nouveau ramenée à une valeur plausible.

3. Procédé selon l'une quelconque des revendications 1 à 2, **caractérisé en ce qu'**un nettoyage individuel automatique de toutes les sonde de mesure, notamment de, est réalisé avant la mesure des grandeurs de mesure.

4. Procédé selon la revendication 3, **caractérisé en ce que** si nécessaire, une compensation de la valeur de mesure est réalisée en chargeant les sondes de mesure UV_{IN} et UV_{OUT} avec la même eau par dérivation du réacteur à ozone-charbon actif, un facteur étalon E_{F} étant alors défini pour les sondes de mesure à partir de la différence de valeur de mesure obtenue.
